# EUROPÄISCHE PATENTSCHRIFT

(11) **EP 3 458 213 B1**
(45) Veröffentlichungstag und Bekanntmachung des Hinweises auf die Patenterteilung: **25.11.2020**
(21) Anmeldenummer: 17734627.7
(22) Anmeldetag: 17.05.2017
(51) Int. Cl.: B22F 5/10, B22F 3/20, B22F 3/22, C22C 29/00, C22C 29/08, B22F 3/24, B22F 5/00

(54) **VERFAHREN ZUR PULVERMETALLURGISCHEN HERSTELLUNG EINES STABFÖRMIGEN KÖRPERS**
METHOD FOR THE POWDER-METALLURGICAL PRODUCTION OF A ROD-LIKE BODY
PROCÉDÉ DE LA MÉTALLURGIE DES POUDRES POUR FABRIQUER UN CORPS EN FORME DE BARRE

(30) Priorität: 20.05.2016 AT 11716 U
(43) Veröffentlichungstag der Anmeldung: 27.03.2019
(73) Patentinhaber: Ceratizit Austria Gesellschaft m.b.H., 6600 Reutte (AT)
(72) Erfinder: BRUNNER, Markus, 6600 Reutte (AT); PAULWEBER, Christian, 6600 Reutte (AT); SCHLEINKOFER, Uwe, 6600 Reutte (AT)
(74) Vertreter: Ciesla, Dirk
(86) Internationale Anmeldenummer: PCT/AT2017/000037
(87) Internationale Veröffentlichungsnummer: WO 2017/197419

(56) Entgegenhaltungen:
- EP-A2- 1 502 721
- DE-A1- 10 260 136
- DE-C1- 10 040 309
- DE-U1- 20 101 101
- DE-U1- 29 624 253

## Beschreibung

Die vorliegende Erfindung betrifft ein Verfahren zur pulvermetallurgischen Herstellung eines stabförmigen Körpers aus Hartmetall, Cermet oder Keramik sowie einen stabförmigen Körper aus Hartmetall, Cermet oder Keramik.

Insbesondere Zerspanungswerkzeuge werden häufig aus Hartmetall, Cermet oder Keramik, insbesondere aus Hartmetall oder Cermet, hergestellt, um eine hohe Härte und gute Verschleißbeständigkeit zu erzielen. Hartmetall (cemented carbide) und Cermet sind Verbundwerkstoffe, bei denen Hartstoffpartikel in einer duktilen metallischen Matrix eingebettet sind, wobei der Anteil der Hartstoffpartikel in Gewichtsprozent deutlich größer als der Anteil der metallischen Matrix ist. Die metallische Matrix ist üblicherweise durch Cobalt, Nickel und/oder Eisen oder eine Basislegierung eines dieser Elemente gebildet, überwiegend durch eine Co-Basislegierung, eine Ni-Basislegierung oder eine Co-Ni-Basislegierung. Im Fall von Hartmetall ist die metallische Matrix üblicherweise eine Co-Basislegierung. Basislegierung eines Metalls bedeutet dabei, dass dieses Metall den Hauptbestandteil der Legierung bildet. Neben den genannten Elementen können noch weitere Elemente in geringeren Mengen in der metallischen Matrix gelöst sein. Die Hartstoffpartikel sind üblicherweise durch Karbide oder Karbonitride von Metallen der Gruppen IV bis VI des Periodensystems gebildet. Im Fall von Hartmetall ist der überwiegende Anteil der Hartstoffpartikel durch WC (Wolframkarbid) gebildet, wobei in geringeren Mengen auch andere Hartstoffpartikel zusätzlich vorliegen können.

Körper aus Hartmetall oder Cermet werden üblicherweise in einem pulvermetallurgischen Herstellungsverfahren aus pulverförmigen Ausgangsmaterialien gefertigt, wobei die finale Dichte durch einen Sinterprozess erreicht wird. Nach dem Durchlaufen des Sinterprozesses lassen sich diese Werkstoffe nur noch sehr schwer und mit wenigen ausgewählten Bearbeitungsverfahren, wie insbesondere durch Schleifen oder Funkenerosion, bearbeiten, die im Hinblick auf die erzielbaren Formen insbesondere von innenliegenden Ausnehmungen oder Kanälen beschränkt sind.

DE 296 24 253 U1 beschreibt ein pulvermetallurgisches Verfahren zum Herstellen von stabförmigen Körpern aus Hartmetall, bei dem in einem Extrusionsverfahren aus plastifizierter Pulvermasse stabförmige Körper mit innenliegenden verdrallten Kanälen erzeugt werden.

EP 1 502 721 A2 beschreibt ein Verfahren zum Herstellen eines stabförmigen Körpers gemäß dem Oberbegriff von Anspruch 1 und einen stabförmigen Körper gemäß dem Oberbegriff von Anspruch 6.

DE 100 40 309 C1 beschreibt ein Herstellungsverfahren für einen Sinterstab, bei dem pastöses Sintermaterial extrudiert und dabei ein Kanal eingebracht wird. Das extrudierte Sintermaterial wird verdrallt und anschließend gesintert.

Es ist Aufgabe der vorliegenden Erfindung, ein verbessertes Verfahren zur pulvermetallurgischen Herstellung eines stabförmigen Körpers und einen verbesserten stabförmigen Körper aus Hartmetall, Cermet oder Keramik bereitzustellen.

Die Aufgabe wird durch ein Verfahren zur pulvermetallurgischen Herstellung eines stabförmigen Körpers aus Hartmetall, Cermet oder Keramik nach Anspruch 1 gelöst. Vorteilhafte Weiterbildungen sind in den abhängigen Ansprüchen angegeben.

Aufgrund der Ausbildung des ersten Kanals bei dem Extrudieren kann diesem z.B. eine Form gegeben werden, die nachträglich nicht mehr ausgebildet werden kann, z.B. eine spiralförmige Erstreckung um eine Längsachse. Dabei können insbesondere auch zwei oder mehr erste Kanäle bei dem Extrudieren ausgebildet werden, insbesondere z.B. spiralförmig verlaufende Kanäle, die sich von einem ersten stirnseitigen Ende bis zu einem zweiten stirnseitigen Ende des stabförmigen Körpers erstrecken. Es ist z.B. aber auch möglich, einen oder mehrere gerade verlaufende Kanäle auszubilden. Der erste Kanal

(bzw. die ersten Kanäle) kann (bzw. können) z.B. zur Durchleitung eines ersten Kühlmittels dienen, wenn der stabförmige Körper ein Zerspanungswerkzeug oder ein Rohling für ein solches ist. Durch die Ausbildung von zumindest einer weiteren Ausnehmung, bei der es sich ebenfalls um einen Kanal handelt, nach dem Extrudieren kann in dem stabförmigen Körper (zusätzlich zu dem durch Extrudieren erzeugten ersten Kanal) somit eine weitere Ausnehmung erzeugt werden, die z.B. eine Form haben kann, die nicht durch Extrudieren erzeugbar ist. Insbesondere ist es z.B. möglich, dass sich die weitere Ausnehmung von einem freien Ende des stabförmigen Körpers nur über einen Teil der axialen Länge im Inneren des stabförmigen Körpers erstreckt. Das Ausbilden der Ausnehmung vor dem Sintern zur Erzielung der finalen Dichte des stabförmigen Körpers ermöglicht dabei die Nutzung relativ einfacher und kostengünstiger mechanischer Bearbeitungsverfahren, wie z.B. Bohren oder Fräsen. Die Bearbeitung kann dabei z.B. unmittelbar an dem aus dem Extrusionsprozess resultierenden Grünling erfolgen oder die Bearbeitung kann sich z.B. auch erst an eine zwischengeschaltete Wärmebehandlung oder Vor- bzw. Teilsinterung anschließen, die jedoch noch nicht zur finalen Dichte des stabförmigen Körpers führt. Erst bei dem nachfolgenden Sinterprozess zur Erzielung der finalen Dichte bildet sich dann die resultierende Hartmetall- bzw. Cermet-Struktur oder Keramik-Struktur aus, die den zumindest einen ersten Kanal und die zumindest eine weitere Ausnehmung aufweist. Verglichen mit z.B. der Ausbildung einer solchen weiteren Ausnehmung erst nach dem Sinterprozess zur Erzielung der finalen Dichte, was z.B. durch Funkenerodieren erfolgen könnte, besteht ein wesentlicher Vorteil darin, dass keine Schädigung der resultierenden Hartmetall- bzw. Cermet-Struktur bzw. Keramik erfolgt und folglich eine hohe Leistungsfähigkeit des stabförmigen Körpers erreicht wird. Dieser Unterschied ist an dem erzeugten stabförmigen Körper aus Hartmetall, Cermet oder Keramik auch z.B. in einem metallurgischen Schliff erkennbar. Mit dem erfindungsgemäßen Verfahren können dabei insbesondere z.B. auch verschiedene interne Kühlmittelkanäle zur Zuführung von verschiedenen Kühl- und/oder Schmiermitteln erzeugt werden. Bevorzugt kann der stabförmige Körper aus Hartmetall oder Cermet gebildet werden.

Gemäß einer Weiterbildung erfolgt das mechanische Bearbeiten zur Ausbildung der zumindest einen weiteren Ausnehmung durch Bohren oder Fräsen. In diesem Fall kann die Bearbeitung besonders kostengünstig und zuverlässig erfolgen und es ist eine große Bandbreite an möglichen Formen der Ausnehmung gegeben.

Gemäß einer Variante wird die zumindest eine weitere Ausnehmung derart ausgebildet, dass sie sich als Kanal von einem ersten stirnseitigen Ende bis zu einem Abstand D von einem zweiten stirnseitigen Ende erstreckt. In diesem Fall kann die weitere Ausnehmung z.B. zum Zuführen eines weiteren Kühlmittels in Richtung des zweiten stirnseitigen Endes genutzt werden, wobei sich die Ausnehmung nicht bis ganz zu dem zweiten stirnseitigen Ende erstrecken muss. Dabei kann die weitere Ausnehmung z.B. auch über eine oder mehrere Verbindungskanäle mit einem Außenumfang des stabförmigen Körpers verbunden werden.

Gemäß einer Variante erfolgt vor dem Sintern zur Erzielung der resultierenden Dichte des stabförmigen Körpers ein mechanisches Bearbeiten zur Ausbildung von zumindest einem Verbindungskanal, der die weitere Ausnehmung mit einem Außenumfang verbindet. In diesen Fall kann über die weitere Ausnehmung z.B. gezielt ein Kühl- oder Schmiermittel zu dem Außenumfang des stabförmigen Körpers zugeführt werden. Es können dabei insbesondere auch mehrere Verbindungskanäle vorgesehen werden. Verbindungskanäle können z.B. an der dem zweiten stirnseitigen Ende zugewandten Seite von der weiteren Ausnehmung abzweigen. Es kann jedoch auch an anderen axialen Positionen eine Abzweigung vorgesehen werden.

Gemäß einer Weiterbildung wird der zumindest eine Verbindungskanal derart ausgebildet, dass er sich ausgehend von der weiteren Ausnehmung zunehmend von dem zweiten stirnseitigen Ende entfernt. In diesem Fall kann in besonders vorteilhafter Weise in dem stabförmigen Körper ein Kühlkanal mit einer von dem zweiten stirnseitigen Ende weg gerichteten Austrittsöffnung ausgebildet werden. In dieser Weise kann eine besonders vorteilhafte rückgerichtete Spülung bei einem Zerspanungswerkzeug vorgesehen werden. Gemäß einer Weiterbildung werden zumindest zwei Verbindungskanäle ausgebildet, die die weitere Ausnehmung jeweils mit dem Außenumfang verbinden. In diesem Fall können besonders vorteilhaft z.B. bei einem Zerspanungswerkzeug zu einer Mehrzahl von Umfangsschneiden verlaufende Kühlmittelaustritte realisiert werden. Es können dabei insbesondere auch mehr als zwei derartige Verbindungskanäle ausgebildet werden.

Gemäß einer Weiterbildung erfolgt nach dem Sintern zur Erzielung der resultierenden Dichte ein Schleifen des gesinterten stabförmigen Körpers zur Ausbildung von zumindest einer Schneide und zumindest einer Spannut. In diesem Fall kann der resultierende stabförmige Körper vorteilhaft als Zerspanungswerkzeug, wie insbesondere als Fräser, Bohrer, Reibahle oder ähnliches, ausgebildet werden.

Die Aufgabe wird ferner durch einen stabförmigen Körper aus Hartmetall, Cermet oder Keramik nach Anspruch 6 gelöst. Vorteilhafte Weiterbildungen sind in den abhängigen Ansprüchen angegeben.

Der stabförmige Körper kann dabei insbesondere auch mehrere durch Extrudieren eingebrachte erste Kanäle und/oder mehrere durch mechanische Bearbeitung eingebrachte weitere Ausnehmungen aufweisen. Der stabförmige Körper ermöglicht z.B. die Herstellung von Zerspanungswerkzeugen mit komplexen Kühlkanälen, von denen einige nur durch Extrudieren hergestellt werden können (wie z.B. spiralförmig entlang einer Längsachse verlaufende Kanäle) und von denen andere durch Extrudieren nur schwer oder gar nicht herstellbar sind. Bevorzugt kann der stabförmige Körper aus Hartmetall oder Keramik gebildet sein.

Der zumindest eine erste Kanal erstreckt sich spiralförmig entlang einer Längsachse. Daher kann der erste Kanal vorteilhaft derart ausgelegt werden, dass er sich bei einem Zerspanungswerkzeug zwischen Spannuten erstreckt. Wiederum können mehrere erste Kanäle vorgesehen sein.

Gemäß einer Weiterbildung erstreckt sich der zumindest eine erste Kanal von einem ersten stirnseitigen Ende bis zu einem zweiten stirnseitigen Ende, sodass der erste Kanal sich in Längsrichtung durch den gesamten stabförmigen Körper erstreckt. In diesem Fall kann der erste Kanal besonders einfach durch Extrudieren erzeugt werden. Ferner wird für den Fall eines Zerspanungswerkzeugs bzw. eines Rohlings für ein Zerspanungswerkzeug eine Zuführung von z.B. Kühlmittel zu dem zweiten stirnseitigen Ende ermöglicht, an dem insbesondere z.B. eine Stirnschneide vorgesehen sein kann.

Gemäß einer Variante erstreckt sich die weitere Ausnehmung als Kanal von einem ersten stirnseitigen Ende bis zu einem Abstand D von einem zweiten stirnseitigen Ende. In diesem Fall kann über die weitere Ausnehmung z.B. ebenfalls ein (ggfs. weiteres) Kühlmittel bis nahe an das zweite stirnseitige Ende zugeführt werden, ohne eine durchgängige Verbindung zu der zweiten Stirnseite vorzusehen. Die weitere Ausnehmung kann dabei z.B. über Verbindungskanäle mit einem Außenumfang des stabförmigen Körpers verbunden werden, um gezielt an von dem zweiten stirnseitigen Ende entfernten Stellen Kühlmittel bereitzustellen.

Gemäß einer Weiterbildung erstreckt sich die weitere Ausnehmung über zumindest 75% einer axialen Länge des stabförmigen Körpers, bevorzugt über zumindest 80% der axialen Länge. In diesem Fall kann die weitere Ausnehmung vorteilhaft zur Zuführung von Kühlmittel genutzt werden. Bevorzugt kann sich die weitere Ausnehmung über höchstens 95% der axialen Länge es stabförmigen Körpers erstrecken.

Gemäß einer Variante verbindet zumindest ein Verbindungskanal die weitere Ausnehmung mit einem Außenumfang des Körpers. Der Verbindungskanal ist ebenfalls vor dem Sintern zu der finalen Dichte durch mechanische Bearbeitung eingebracht. Es können insbesondere auch mehrere Verbindungskanäle, die sich an dieselbe weitere Ausnehmung oder an verschiedene weitere Ausnehmungen anschließen können, vorgesehen sein.

Gemäß einer Weiterbildung entfernt sich der Verbindungskanal mit zunehmendem Abstand von der weiteren Ausnehmung von dem zweiten stirnseitigen Ende. In diesem Fall kann der Verbindungskanal z.B. vorteilhaft als in Richtung eines Einspannabschnitts eines Zerspanungswerkzeugs gerichteter Kühlmittelkanal genutzt werden, um eine Rückspülung zu erzielen. Es können mehrere derartige, nach hinten gerichtete Verbindungskanäle vorgesehen werden. Es können neben dem nach hinten gerichteten Verbindungskanal (bzw. Verbindungskanälen) ferner auch zusätzlich noch in Richtung des zweiten stirnseitigen Endes ausgerichtete Verbindungskanäle vorgesehen sein.

Gemäß einer bevorzugten Ausgestaltung ist der stabförmige Körper ein Rohling für ein Zerspanungswerkzeug oder ein Zerspanungswerkzeug.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung eines ersten Ausführungsbeispiels eines stabförmigen Körpers aus Hartmetall, Cermet oder Keramik;
- Fig. 2:: eine schematische Darstellung eines Grünlings für den stabförmigen Körper nach einem Extrudieren unter Ausbildung von ersten Kanälen;
- Fig. 3:: eine schematische Darstellung zur Erläuterung der Ausbildung von einer weiteren Ausnehmung und von Verbindungskanälen;
- Fig. 4a:: eine schematische Darstellung einer zweiten Ausführungsform;
- Fig. 4b:: eine schematische Darstellung zur Erläuterung der Ausbildung von einer weiteren Ausnehmung und von Verbindungskanälen bei der zweiten Ausführungsform;
- Fig. 5a:: eine schematische Darstellung einer dritten Ausführungsform;
- Fig. 5b:: eine schematische Darstellung zur Erläuterung der Ausbildung von einer weiteren Ausnehmung und von Verbindungskanälen bei der dritten Ausführungsform;
- Fig. 6a:: eine schematische Darstellung einer vierten Ausführungsform;
- Fig. 6b:: eine schematische Darstellung zur Erläuterung der Ausbildung von einer weiteren Ausnehmung und von Verbindungskanälen bei der vierten Ausführungsform; und
- Fig. 7:: eine schematische Darstellung einer fünften Ausführungsform.

### ERSTE AUSFÜHRUNGSFORM

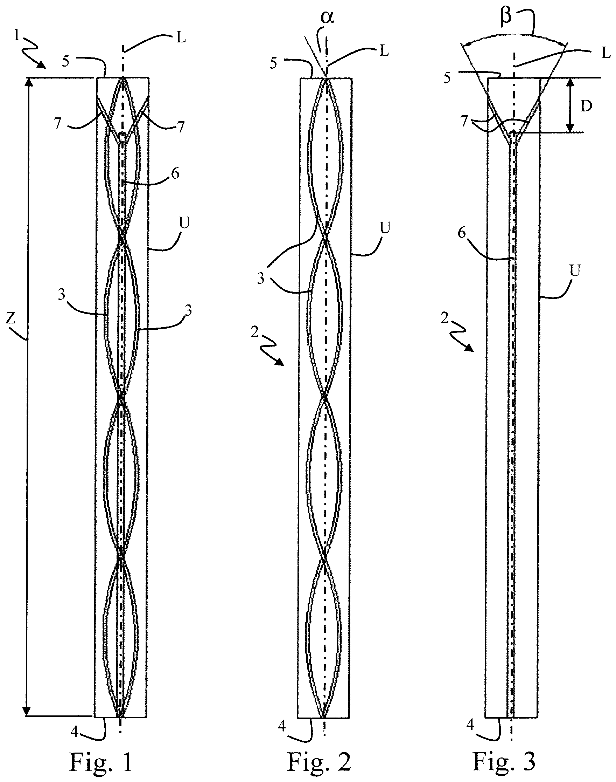

Eine erste Ausführungsform eines stabförmigen Körpers 1 aus Hartmetall, Cermet oder Keramik und eines entsprechenden Verfahrens zur pulvermetallurgischen Herstellung von diesem wird nachfolgend mit Bezug auf die Fig. 1 bis Fig. 3 erläutert.

Bei dem unter Bezug auf die Fig. 1 bis Fig. 3 beschriebenen stabförmigen Körper 1 handelt es sich um einen stabförmigen Rohling für ein Zerspanungswerkzeug, wie z.B. insbesondere einen Bohrer oder Fräser. Es sind jedoch auch andere Realisierungen möglich. Durch eine Schleifbearbeitung kann der Rohling noch in allgemein bekannter Weise mit Spannuten und Schneidkanten versehen werden, um ein Zerspanungswerkzeug auszubilden. Dieses kann gegebenenfalls auch noch in an sich bekannter Weise mit einer Hartstoffbeschichtung versehen werden, insbesondere einer PVD- (physical vapour deposition) oder CVD-Beschichtung (chemical vapour deposition).

Bei dem Verfahren zur pulvermetallurgischen Herstellung des stabförmigen Körpers 1 wird zunächst in einem ersten Schritt eine plastifizierte Ausgangsmasse für das Hartmetall bzw. Cermet oder die Keramik in einem Extrusionsverfahren zu einem stabförmigen Grünling 2 extrudiert. Das Extrusionsverfahren erfolgt dabei derart, dass dabei in dem Grünling 2 zumindest ein erster Kanal 3 ausgebildet wird. Ein solcher aus dem Extrusionsverfahren resultierender Grünling 2 ist in Fig. 2 schematisch dargestellt. Bei dem konkret dargestellten Beispiel sind in dem Grünling 2 zwei erste Kanäle 3 ausgebildet, die sich spiralförmig verdrallt um die Längsachse L erstrecken. Obwohl in dem konkret dargestellten Beispiel zwei erste Kanäle 3 gezeigt sind, kann z.B. auch nur ein erster Kanal ausgebildet werden oder es können auch mehr als zwei solche erste Kanäle 3 ausgebildet werden. Anstelle der dargestellten verdrallten ersten Kanäle 3 können z.B. auch gerade, parallel zu der Längsachse L verlaufende erste Kanäle 3 ausgebildet werden.

Die ersten Kanäle 3 erstrecken sich bei der ersten Ausführungsform von einem ersten stirnseitigen Ende 4, das z.B. bei einem Zerspanungswerkzeug als Einspannabschnitt dienen kann, bis zu einem zweiten stirnseitigen Ende 5, an dem z.B. bei einem Zerspanungswerkzeug eine Stirnschneide ausgebildet werden kann. Wie in Fig. 2 schematisch dargestellt ist, erstrecken sich die ersten Kanäle 3 unter einem Spiralwinkel α gegenüber der Längsachse L. Der Spiralwinkel α kann z.B. in einem Bereich zwischen 0° und 60° liegen.

Der derart gefertigte Grünling 2 wird anschließend mechanisch weiterbearbeitet, was insbesondere durch Bohren, Fräsen oder Ähnliches erfolgen kann. Bevor diese mechanische Bearbeitung erfolgt, kann der Grünling 2 insbesondere zunächst noch getrocknet werden bzw. einer Wärmebehandlung unterworfen werden, um dessen mechanische Stabilität zu erhöhen. Die Wärmebehandlung kann dabei insbesondere z.B. auch derart erfolgen, dass eine Vorsinterung oder Teilsinterung erfolgt, die aber noch nicht zu einer resultierenden finalen Dichte des Hartmetalls bzw. Cermets oder der Keramik führt. Es ist wichtig, dass zu diesem Zeitpunkt noch keine vollständige Sinterung zu der finalen Dichte erfolgt, um die mechanische Bearbeitung in einfacher Weise zu ermöglichen.

In Fig. 3 sind schematisch die Strukturen dargestellt, die bei der ersten Ausführungsform durch die mechanische Bearbeitung eingebracht werden, wobei zur Vereinfachung die bereits vorhandenen, durch den Extrusionsprozess eingebrachten ersten Kanäle 3 nicht dargestellt sind. Wie in Fig. 3 zu sehen ist, wird bei der mechanischen Bearbeitung eine weitere Ausnehmung 6 ausgebildet, die bei der ersten Ausführungsform ein weiterer Kanal ist, der sich von dem ersten stirnseitigen Ende 4 bis zu einem Abstand D von dem zweiten stirnseitigen Ende 5 erstreckt. Bei der ersten Ausführungsform erstreckt sich die Ausnehmung 6 dabei über einen erheblich Teil der axialen Länge Z, insbesondere über mehr als 75% der axialen Länge, insbesondere sogar über mehr als 80% der axialen Länge Z. Obwohl bei der ersten Ausführungsform die weitere Ausnehmung 6 ein Kanal ist, der sich konzentrisch und parallel zu der Längsachse L erstreckt, kann diese z.B. auch versetzt zu der Längsachse ausgebildet werden und/oder auch schräg zu der Längsachse L verlaufen. Ferner können auch mehrere solche weiteren Ausnehmungen 6 ausgebildet werden.

Wie in Fig. 3 weiter zu sehen ist, werden bei der mechanischen Bearbeitung bei der ersten Ausführungsform auch Verbindungskanäle 7 ausgebildet, die die erste Ausnehmung 6 mit dem Außenumfang U des Grünlings 2 (bzw. des aus diesem gebildeten teilgesinterten Körpers) verbinden. Obwohl bei der ersten Ausführungsform zwei solche Verbindungskanäle 7 dargestellt sind, ist es z.B. auch möglich, nur einen solchen Verbindungskanal 7 oder mehr als zwei Verbindungskanäle 7 auszubilden. Bei der ersten Ausführungsform erstrecken sich die Verbindungskanäle 7 von dem Ende der Ausnehmung 6, das dem zweiten stirnseitigen Ende 5 zugewandt ist, schräg nach außen und in Richtung des zweiten stirnseitigen Endes 5. Die Verbindungskanäle 7 sind bezüglich der Längsachse L symmetrisch zueinander ausgebildet und schließen einen Öffnungswinkel β ein. Gemäß Abwandlungen ist es z.B. aber auch möglich, die Verbindungskanäle 7 asymmetrisch auszubilden, die Verbindungskanäle 7 an einer anderen Stelle von der Ausnehmung 6 abzweigen zu lassen und/oder einen oder mehrere Verbindungskanäle 7 derart auszubilden, dass sie sich ausgehend von der Ausnehmung 6 schräg nach außen und in Richtung des ersten stirnseitigen Endes 4 erstrecken.

Nach der anhand von Fig. 3 beschriebenen mechanischen Bearbeitung wird der Grünling 2 (bzw. teilgesinterte Körper) einem Sinterprozess unterzogen, um die gewünschte finale Dichte zu erzielen und den in Fig. 1 schematisch dargestellten stabförmigen Körper 1 aus Hartmetall, Cermet oder Keramik zu erzeugen. Um eine gewünschte Genauigkeit und Geradlinigkeit des stabförmigen Körpers 1 zu erzielen, wird der stabförmige Körper 1 nach dem Sintern noch einer Schleifbearbeitung unterzogen, bei der der Außenumfang U auf das gewünschte Maß geschliffen wird. Der derart gebildete Rohling für ein Zerspanungswerkzeug kann anschließend durch eine weitere Schleifbearbeitung mit einer oder mehreren Spannuten und einer oder mehreren Schneiden versehen werden, um ein gewünschtes Zerspanungswerkzeug zu erzeugen. Abhängig von der beabsichtigten Anwendung kann das Zerspanungswerkzeug dann auch noch in an sich bekannter Weise mit einer Hartstoffbeschichtung versehen werden, z.B. mittels eines CVD- oder PVD-Verfahrens.

### ZWEITE AUSFÜHRUNGSFORM

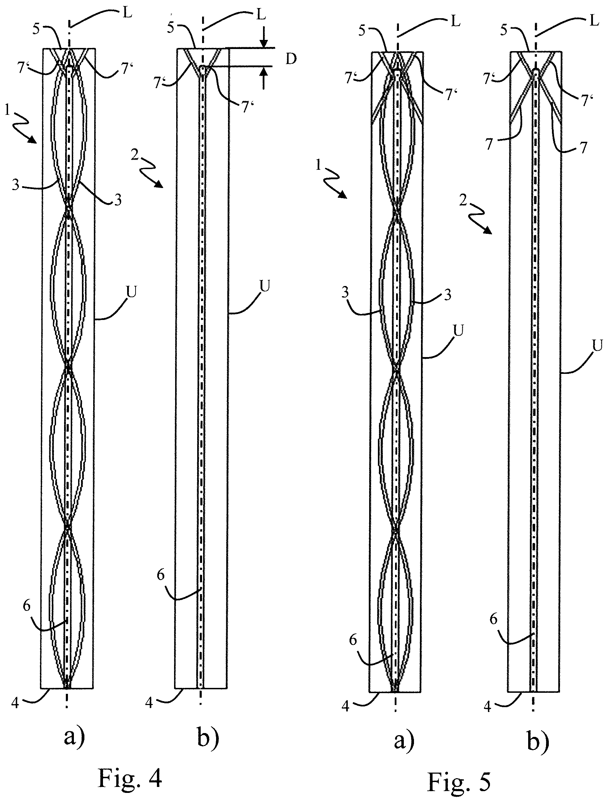

Eine zweite Ausführungsform wird nachfolgend unter Bezugnahme auf die Fig. 4a) und Fig. 4b) beschrieben, wobei zur Vermeidung von Wiederholungen nur die Unterschiede zu der zuvor beschriebenen ersten Ausführungsform beschrieben werden und für entsprechende Komponenten und Strukturen auch dieselben Bezugszeichen verwendet werden. Auch bei der zweiten Ausführungsform können ferner die in Bezug auf die erste Ausführungsform beschriebenen Abwandlungsmöglichkeiten zum Einsatz kommen, soweit dies möglich ist. In Fig. 4a) ist der resultierende stabförmige Körper 1 dargestellt. Fig. 4b) ist eine schematische Darstellung, die wiederum dazu dient, die durch mechanische Bearbeitung nach einem Extrudieren ausgebildeten Strukturen zu erläutern.

Die zweite Ausführungsform wird ebenso wie die erste Ausführungsform basierend auf dem mit Bezug auf Fig. 2 beschriebenen extrudierten Grünling 2 erzeugt, in den durch mechanische Bearbeitung vor einem Sintern zu der finalen Dichte die in Fig. 4b) schematisch dargestellten zusätzlichen Strukturen eingebracht werden. Die zweite Ausführungsform unterscheidet sich darin von der ersten Ausführungsform, dass sich die weitere Ausnehmung 6 noch weiter in Richtung des zweiten stirnseitigen Endes 5 erstreckt, sodass der Abstand D noch etwas kleiner als bei der ersten Ausführungsform ist, sowie darin, dass anstelle der zuvor beschriebenen Verbindungskanäle 7 abgewandelte Verbindungskanäle 7' ausgebildet werden, die sich ausgehend von der Ausnehmung 6 schräg derart in Richtung des zweiten stirnseitigen Endes 5 erstrecken, dass sie dort Austrittsöffnungen ausbilden.

Da ansonsten keine Unterschiede zu der zuvor beschriebenen ersten Ausführungsform bestehen, wird im Hinblick auf das Verfahren zur Herstellung und die weiteren Abwandlungen, insbesondere im Hinblick auf Verlauf, Ausrichtung, Anzahl etc. von ersten Kanälen 3, weiteren Ausnehmungen 6 und Verbindungskanälen 7 auf die diesbezüglichen Erläuterungen zur ersten Ausführungsform verwiesen. Obwohl auch bei der zweiten Ausführungsform zwei solche abgewandelte Verbindungskanäle 7' gezeigt sind, ist es z.B. auch möglich, nur einen solchen abgewandelten Verbindungskanal oder mehr als zwei derartige abgewandelte Verbindungskanäle 7' vorzusehen.

### DRITTE AUSFÜHRUNGSFORM

Eine dritte Ausführungsform wird im Folgenden kurz unter Bezugnahme auf die Fig. 5a) und Fig. 5b) beschrieben. Fig. 5a) ist wieder eine schematische Darstellung eines stabförmigen Körpers 1 aus Hartmetall, Cermet oder Keramik gemäß der dritten Ausführungsform und Fig. 5b) ist eine schematische Darstellung zur Erläuterung der durch mechanische Bearbeitung ausgebildeten Strukturen. Da sich die dritte Ausführungsform nur in Details von der zuvor beschriebenen zweiten Ausführungsform unterscheidet, werden zur Vermeidung von Wiederholungen nur die Unterschiede zu der zweiten Ausführungsform beschrieben und es werden wieder dieselben Bezugszeichen verwendet.

Die dritte Ausführungsform unterscheidet sich darin von der zweiten Ausführungsform, dass bei der mechanischen Bearbeitung vor dem Sintern zur Erzielung der finalen Dichte zusätzlich zu den Verbindungskanälen 7', die von der Ausnehmung 6 zu dem zweiten stirnseitigen Ende 5 verlaufen, auch noch weitere Verbindungskanäle 7 ausgebildet werden, die sich wie bei der ersten Ausführungsform von der Ausnehmung 6 zu dem Außenumfang U erstrecken und dort Austrittsöffnungen ausbilden. Im Unterschied zu der ersten Ausführungsform erstrecken sich diese Verbindungskanäle 7 bei der dritten Ausführungsform aber von der Ausnehmung 6 nach außen und in Richtung des ersten stirnseitigen Endes 4, d.h. die Verbindungskanäle 7 erstrecken sich von der Ausnehmung 6 schräg nach hinten in Richtung des ersten stirnseitigen Endes 4, sodass sie bei einem Zerspanungswerkzeug als Rückspülkanäle genutzt werden können, um z.B. erzeugte Späne in Richtung des ersten stirnseitigen Endes 4 abzuführen. Auch bei der dritten Ausführungsform ist es möglich, die Anzahl der Verbindungskanäle 7zu variieren, d.h. nur einen oder mehr als zwei vorzusehen. Ferner können gemäß einer Abwandlung auch nur die Verbindungskanäle 7 vorgesehen werden und die abgewandelten Verbindungskanäle 7' können weggelassen werden. Ferner können auch weitere Ausnehmungen 6, die sich auch versetzt und/oder schräg zu der Längsachse L erstrecken können, und zugeordnete Verbindungskanäle 7 vorgesehen werden.

### VIERTE AUSFÜHRUNGSFORM

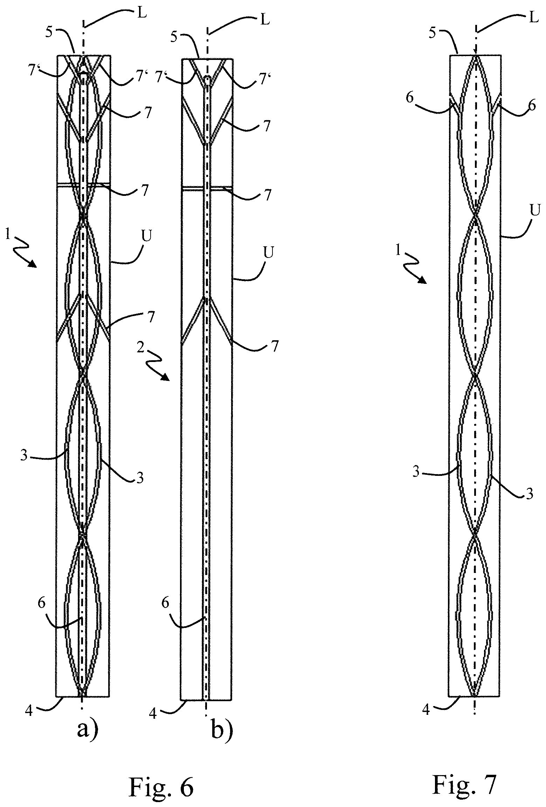

Eine weitere, vierte Ausführungsform, bei der gegenüber der zweiten Ausführungsform zusätzliche Verbindungskanäle 7 ausgebildet sind, ist in Fig. 6a) schematisch dargestellt. Da sich die vierte Ausführungsform von der zweiten Ausführungsform nur in der Ausgestaltungen dieser Verbindungskanäle 7 unterscheidet, werden im Folgenden zur Vermeidung von Wiederholungen nur die Unterschiede erläutert und es werden wieder dieselben Bezugszeichen verwendet. Fig. 6b) ist auch hier eine schematische Darstellung zur Erläuterung der Strukturen, die vor dem Sintern zu einer finalen Dichte durch mechanische Bearbeitung ausgebildet werden.

Die vierte Ausführungsform unterscheidet sich darin von der zweiten Ausführungsform, das neben den zu dem zweiten stirnseitigen Ende 5 verlaufenden abgewandelten Verbindungskanälen 7' auch eine Mehrzahl von sich zum Außenumfang U erstreckenden Verbindungskanälen 7 vorgesehen ist. Diese Verbindungskanäle 7 zweigen an verschiedenen axialen Positionen (bezogen auf die Längsachse L) von der Ausnehmung 6 ab und erstrecken sich jeweils von der Ausnehmung 6 bis zu dem Außenumfang U. In der beispielhaften Realisierung gemäß der vierten Ausführungsform erstrecken sich dabei zwei der Verbindungskanäle 7 ausgehend von der Ausnehmung 6 schräg nach außen und in Richtung des zweiten freien Endes 5, erstrecken sich andere zwei der Verbindungskanäle 7 schräg nach außen und in Richtung des ersten freien Endes 4 und erstrecken sich weitere zwei der Verbindungskanäle 7 im Wesentlichen senkrecht zu der Ausnehmung nach außen. Auch bei der vierten Ausführungsform gibt es eine Vielzahl an Variationsmöglichkeiten hinsichtlich der Anzahl, der Position, der Ausrichtung, etc. der Verbindungskanäle 7.

### FÜNFTE AUSFÜHRUNGSFORM

Eine fünfte Ausführungsform wird im Folgenden mit Bezug auf Fig. 7 beschrieben. Auch bei der fünften Ausführungsform werden zur Vermeidung von Wiederholungen lediglich die Unterschiede zu der ersten Ausführungsform beschrieben und es werden wieder dieselben Bezugszeichen verwendet.

Auch bei der fünften Ausführungsform werden ausgehend von einem extrudierten Grünling 2, in dem erste Kanäle 3 ausgebildet sind, wie in Fig. 2 schematisch dargestellt ist und zur ersten Ausführungsform detailliert beschrieben wurde, durch mechanische Bearbeitung des Grünlings 2 (bzw. eines wärmebehandelten oder teilgesinterten Körpers basierend auf diesem) weitere Ausnehmungen 6 ausgebildet. Im Unterschied zu der zuvor beschriebenen Ausbildung einer weiteren Ausnehmung ausgehend von dem ersten stirnseitigen Ende 4, sodass ein weiterer Kanal in dem stabförmigen Körper 1 ausgebildet wurde, werden die weiteren Ausnehmungen 6 bei der fünften Ausführungsform als Verbindungskanäle ausgebildet, die die beiden ersten Kanäle 3 jeweils mit dem Außenumfang U verbinden. In dieser Weise wird bei der fünften Ausführungsform eine verzweigte Kanalstruktur in dem stabförmigen Körper 1 aus Hartmetall, Cermet oder Keramik erreicht, bei der der jeweilige erste Kanal 3 nicht nur mit dem zweiten stirnseitigen Ende 5 in Verbindung steht, sondern auch mit dem Außenumfang U des stabförmigen Körpers 1. Obwohl bei der fünften Ausführungsform je zwei erste Kanäle 3 und zwei als Verbindungskanäle ausgebildete weitere Ausnehmungen 6 gezeigt sind, kann z.B. auch wieder nur ein erster Kanal 3 vorgesehen oder es können auch mehr als zwei erste Kanäle 3 vorgesehen sein, die auch einen anderen Verlauf und eine andere Ausrichtung haben können. Ferner können auch mehrere weitere Ausnehmungen 6 als Verbindungskanäle zu demselben ersten Kanal 3 ausgebildet sein, es können auch zusätzliche weitere Verbindungskanäle 7 vorgesehen werden und/oder es können auch ein oder mehrere weitere Ausnehmungen 6 in anderer Weise ausgebildet sein, sodass sie nicht als Verbindungskanal dienen. Obwohl in Bezug auf die fünfte Ausführungsform beschrieben wurde, dass sich die Ausnehmungen 6 von dem ersten Kanal 3 jeweils schräg nach außen und in Richtung des zweiten stirnseitigen Endes 5 erstrecken, sind z.B. auch Ausgestaltungen möglich, bei denen sich eine oder mehrere Ausnehmungen 6 im Wesentlichen senkrecht zur Längsachse L oder schräg nach außen und in Richtung des ersten stirnseitigen Endes 4 erstrecken.

## Patentansprüche

1. Verfahren zur pulvermetallurgischen Herstellung eines stabförmigen Körpers (1) aus Hartmetall, Cermet oder Keramik durch Extrudieren einer Ausgangsmasse und Sintern,
wobei das Extrudieren der Ausgangmasse derart erfolgt, dass zumindest ein erster Kanal (3) ausgebildet wird, und
wobei vor einem Sintern zur Erzielung der finalen Dichte des stabförmigen Körpers (1) ein mechanisches Bearbeiten zur Ausbildung von zumindest einer weiteren Ausnehmung (6) erfolgt,
**dadurch gekennzeichnet, dass** die zumindest eine weitere Ausnehmung (6) als Verbindungskanal ausgebildet wird, der den ersten Kanal (3) mit einem Außenumfang (U) verbindet,
oder
die zumindest eine weitere Ausnehmung (6) derart ausgebildet wird, dass sie sich als Kanal von einem ersten stirnseitigen Ende (4) bis zu einem Abstand D von einem zweiten stirnseitigen Ende (5) erstreckt und vor dem Sintern zur Erzielung der resultierenden Dichte des stabförmigen Körpers (1) ein mechanisches Bearbeiten zur Ausbildung von zumindest einem Verbindungskanal (7), der die weitere Ausnehmung (6) mit einem Außenumfang (U) verbindet, oder von zumindest einem Verbindungskanal (7') der sich ausgehend von der Ausnehmung (6) schräg derart in Richtung des zweiten stirnseitigen Endes (5) erstreckt, dass er dort eine Austrittsöffnung bildet, erfolgt.

2. Verfahren nach Anspruch 1, wobei das mechanische Bearbeiten zur Ausbildung der zumindest einen weiteren Ausnehmung (6) durch Bohren oder Fräsen erfolgt.

3. Verfahren nach Anspruch 1 oder 2, wobei der zumindest eine Verbindungskanal (7) derart ausgebildet wird, dass er sich ausgehend von der weiteren Ausnehmung (6) zunehmend von dem zweiten stirnseitigen Ende (5) entfernt.

4. Verfahren nach einem der vorangehenden Ansprüche, wobei zumindest zwei Verbindungskanäle (7) ausgebildet werden, die die weitere Ausnehmung (6) jeweils mit dem Außenumfang (U) verbinden.

5. Verfahren nach einem der vorangehenden Ansprüche, mit dem Schritt:
- nach dem Sintern zur Erzielung der resultierenden Dichte: Schleifen des gesinterten stabförmigen Körpers (1) zur Ausbildung von zumindest einer Schneide und zumindest einer Spannut.

6. Stabförmiger Körper (1) aus Hartmetall, Cermet oder Keramik, der pulvermetallurgisch mittels Extrudieren und Sintern gefertigt ist, mit:
zumindest einem durch Extrudieren eingebrachten ersten Kanal (3), der sich spiralförmig entlang einer Längsachse (L) erstreckt;
zumindest einer vor einem Sintern zu einer finalen Dichte durch eine mechanische Bearbeitung eingebrachten weiteren Ausnehmung (6),
**dadurch gekennzeichnet, dass**
die weitere Ausnehmung (6) als Verbindungskanal ausgebildet ist, der den ersten Kanal (3) mit einem Außenumfang (U) verbindet,
oder
sich die weitere Ausnehmung (6) als Kanal von einem ersten stirnseitigen Ende (4) bis zu einem Abstand D von einem zweiten stirnseitigen Ende (5) erstreckt und
zumindest ein Verbindungskanal (7) die weitere Ausnehmung (6) mit einem Außenumfang (U) des Körpers verbindet oder sich ein Verbindungskanal (7') ausgehend von der weiteren Ausnehmung (6) derart schräg in Richtung des zweiten stirnseitigen Endes (5) erstreckt, dass er dort eine Austrittsöffnung bildet.

7. Stabförmiger Körper nach Anspruch 6, wobei sich der zumindest eine erste Kanal (3) von einem ersten stirnseitigen Ende (4) bis zu einem zweiten stirnseitigen Ende (5) erstreckt.

8. Stabförmiger Körper nach einem der Ansprüche 6 oder 7, wobei sich die weitere Ausnehmung (6) über zumindest 75% einer axialen Länge (Z) des stabförmigen Körpers (1) erstreckt, bevorzugt über zumindest 80% der axialen Länge (Z).

9. Stabförmiger Körper nach einem der Ansprüche 6 bis 8, wobei sich der Verbindungskanal (7) mit zunehmendem Abstand von der weiteren Ausnehmung (6) von dem zweiten stirnseitigen Ende (5) entfernt.

10. Stabförmiger Körper nach einem der Ansprüche 6 bis 9, wobei der stabförmige Körper (1) ein Rohling für ein Zerspanungswerkzeug oder ein Zerspanungswerkzeug ist.

## Claims

1. A method for powder-metallurgical production of a rod-shaped body (1) of cemented carbide, cermet or ceramic by extrusion of an initial mass and sintering,
wherein extrusion of the initial mass is carried out in such a way that at least a first channel (3) is formed, and
wherein - prior to sintering to attain the final density of the rod-shaped body (1) - machining for forming at least one further recess (6) is carried out,
**characterized in that**
the at least one further recess (6) is formed as a connecting channel connecting the first channel (3) with an outer circumference (U), or the at least one further recess (6) is formed such that it extends as a channel from a first face side end (4) up to a distance D from a second face side end (5) and - prior to sintering for attaining the resulting density of the rod-shaped body (1) - machining is carried out for forming at least one connecting channel (7) connecting the further recess (6) with an outer circumference (U) or at least one connecting channel (7') extending starting from the recess (6) obliquely in the direction of the second face side end (5) such that it forms an exit opening there.

2. The method according to claim 1, wherein machining for forming the at least one further recess (6) is carried out by drilling or milling.

3. The method according to claim 1 or 2, wherein the at least one connecting channel (7) is formed such that starting from the further recess (6) it increasingly extends away from the second face side end (5).

4. The method according to any one of the preceding claims, wherein at least two connecting channels (7) are formed each connecting the further recess (6) with the outer circumference (U).

5. The method according to any one of the preceding claims, having the step - after sintering to attain the resulting density: grinding the sintered rod-shaped body (1) for forming at least one cutting edge and at least one chip flute.

6. A rod-shaped body (1) of cemented carbide, cermet or ceramics being formed powder-metallurgically by means of extrusion and sintering, the rod-shaped body (1) having:
at least one first channel (3) formed by extrusion and extending spirally along a longitudinal axis (L),
at least one further recess (6) formed by machining prior to sintering to a final density,
**characterized in that**
the further recess (6) is formed as a connecting channel connecting the first channel (3) with an outer circumference (U), or
the further recess (6) extends as a channel from a first face side end (4) up to a distance D from a second face side end (5) and
at least one connecting channel (7) connects the further recess (6) with an outer circumference (U) of the body or a connecting channel (7') extends starting from the further recess (6) obliquely in the direction of the second face side end (5) such that it forms an exit opening there.

7. The rod-shaped body according to claim 6, wherein the at least one first channel (3) extends from a first face side end (4) to a second face side end (5).

8. The rod-shaped body according to claim 6 or 7, wherein the further recess (6) extends over at least 75% of an axial length (Z) of the rod-shaped body (1), preferably over at least 80% of the axial length (Z).

9. The rod-shaped body according to any one of claims 6 to 8, wherein the connecting channel (7) increasingly extends away from the second face side end (5) with increasing distance from the further recess (6).

10. The rod-shaped body according to any one of claims 6 to 9, wherein the rod-shaped body (1) is a blank for a machining tool or is a machining tool.

## Revendications

1. Procédé de fabrication par métallurgie des poudres d'un corps en forme de barre (1) en métal dur, en cermet ou en céramique par extrusion d'une masse de départ et par frittage,
l'extrusion de la masse de départ étant effectuée de telle sorte qu'au moins un premier canal (3) est réalisé, et
dans lequel, avant un frittage pour obtenir la densité finale du corps en forme de barre (1), un usinage mécanique est effectué pour réaliser au moins un évidement supplémentaire (6),
**caractérisé en ce que** ledit au moins un évidement supplémentaire (6) est réalisé comme un canal de liaison qui relie le premier canal (3) à une circonférence extérieure (U), ou
ledit au moins un évidement supplémentaire (6) est réalisé de telle sorte qu'il s'étend sous forme de canal d'une première extrémité frontale (4) jusqu'à une distance D d'une deuxième extrémité frontale (5), et avant le frittage pour obtenir la densité résultante du corps en forme de barre (1), un usinage mécanique est effectué pour réaliser au moins un canal de liaison (7) qui relie l'évidement supplémentaire (6) à une circonférence extérieure (U) ou au moins un canal de liaison (7') qui s'étend en partant de l'évidement (6) en oblique en direction de la deuxième extrémité frontale (5) de telle sorte qu'il y forme un orifice de sortie.

2. Procédé selon la revendication 1, dans lequel l'usinage mécanique pour réaliser ledit au moins un évidement supplémentaire (6) est effectué par perçage ou par fraisage.

3. Procédé selon la revendication 1 ou 2, dans lequel ledit au moins un canal de liaison (7) est réalisé de telle sorte qu'il s'éloigne progressivement de la deuxième extrémité frontale (5) en partant de l'évidement supplémentaire (6).

4. Procédé selon l'une quelconque des revendications précédentes, dans lequel au moins deux canaux de liaison (7) sont réalisés qui relient l'évidement supplémentaire (6) à la circonférence extérieure (U) respectivement.

5. Procédé selon l'une quelconque des revendications précédentes, comprenant l'étape consistant à :
- après le frittage pour obtenir la densité résultante : meuler le corps en forme de barre (1) fritté pour réaliser au moins une lame et au moins une rainure à copeaux.

6. Corps en forme de barre (1) en métal dur, en cermet ou en céramique qui est fabriqué par métallurgie des poudres au moyen d'une extrusion et d'un frittage, comprenant :
au moins un premier canal (3) introduit par extrusion qui s'étend en forme de spirale le long d'un axe longitudinal (L) ;
au moins un évidement supplémentaire (6) introduit par un usinage mécanique, avant un frittage jusqu'à une densité finale,
**caractérisé en ce que**
l'évidement supplémentaire (6) est réalisé comme un canal de liaison qui relie le premier canal (3) à une circonférence extérieure (U),
ou
l'évidement supplémentaire (6) s'étend comme un canal d'une première extrémité frontale (4) jusqu'à une distance D d'une deuxième extrémité frontale (5), et
au moins un canal de liaison (7) relie l'évidement supplémentaire (6) à une circonférence extérieure (U) du corps, ou un canal de liaison (7') s'étend en partant de l'évidement supplémentaire (6) en oblique en direction de la deuxième extrémité frontale (5) de telle sorte qu'il y forme un orifice de sortie.

7. Corps en forme de barre selon la revendication 6, dans lequel ledit au moins un premier canal (3) s'étend d'une première extrémité frontale (4) à une deuxième extrémité frontale (5).

8. Corps en forme de barre selon l'une quelconque des revendications 6 et 7, dans lequel l'évidement supplémentaire (6) s'étend sur au moins 75 % d'une longueur axiale (Z) du corps en forme de barre (1), de préférence sur au moins 80 % de la longueur axiale (Z).

9. Corps en forme de barre selon l'une quelconque des revendications 6 à 8, dans lequel le canal de liaison (7) s'éloigne de la deuxième extrémité frontale (5) avec une distance croissante par rapport à l'évidement supplémentaire (6).

10. Corps en forme de barre selon l'une quelconque des revendications 6 à 9, dans lequel le corps en forme de barre (1) est une ébauche pour un outil à enlèvement de copeaux ou est un outil à enlèvement de copeaux.
